# EUROPÄISCHE PATENTSCHRIFT

(11) **EP 1 560 743 B1**
(45) Veröffentlichungstag und Bekanntmachung des Hinweises auf die Patenterteilung: **19.07.2006**
(21) Anmeldenummer: 03769460.1
(22) Anmeldetag: 28.10.2003
(51) Int. Cl.: B62D 27/02, B62D 25/20

(54) **VERBINDUNGSKNOTEN FÜR SCHALENELEMENTE**
CONNECTING JOINT FOR SHELL ELEMENTS
NOEUD D'ASSEMBLAGE POUR ELEMENTS DE COQUE

(30) Priorität: 06.11.2002 DE 10252030; 13.11.2002 DE 10252790
(43) Veröffentlichungstag der Anmeldung: 10.08.2005
(73) Patentinhaber: ThyssenKrupp Steel AG, 47166 Duisburg (DE)
(72) Erfinder: BEDNARSKI, Piotr, 65187 Wiesbaden (DE)
(74) Vertreter: Knauf, Rudolf
(86) Internationale Anmeldenummer: PCT/EP2003/011922
(87) Internationale Veröffentlichungsnummer: WO 2004/041625

(56) Entgegenhaltungen:
- DE-A- 10 036 790
- US-A- 5 297 836

## Beschreibung

Die Erfindung betrifft eine Fahrzeugkarosserie aus einem metallischen Werkstoff, mit in Schalenbauweise ausgebildeten, miteinander verbundenen Schalenelementen, wobei von jeweils zwei miteinander verbundenen Schalenelementen das eine Schalenelement an seinem dem anderen Schalenelement zugewandten Rand Überstände aufweist, die durch im anderen Schalenelement ausgebildete Durchstecköffnungen gesteckt sind. Besonders geeignet ist eine solche Verbindungstechnik für eine Fahrzeugkarosserie aus Stahl mit Schalenelementen für die Bodenplatte und die Seitenwände mit integrierten Seitenschwellern.

Bei der Fertigung von Fährzeugkarosserien auf der Basis von Schalenelementen handelt es um eine seit langem etablierte Technik. Schalenelemerite, d.h. anwendungsspezifisch geformte Blechelemente zumeist bestehend aus miteinander verbundener Ober- und Unterschale, erfüllen dabei die Funktion einer umhüllenden Wandung und zugleich die eines tragenden Bauteils. Derartig hergestellte Fahrzeugkarosserien zeichnen sich durch ein geringes Gewicht sowie durch eine im Vergleich zu der auf Profilen basierenden Space-Frame-Bauweise deutlich verringerte Teilezahl aus.

Einen Schwachpunkt bei der Schalenbauweise bildet die Verbindung der Schalenelemente untereiriander. In herkömmlicher Weise sind zwei Schalenelemente, beispielsweise die Bodenplatte einer Fahrzeugkarosserie und die zugehörige Fahrzeugseitenwand, miteinander über an der Bodenplatte ausgebildete, umgebogene Randbereiche verbunden, die an der Seitenwand anliegen und mit ihr stoffschlüssig, in der Regel durch Schweißen, verbunden sind. Diese Art der Anbindung ist zwar einfach zu -realisieren, bietet jedoch eine heutigen Anforderungen nicht mehr entsprechende Steifigkeit, da sie maßgeblich von der Festigkeit der stoffschlüssigen Verbindung abhängt. Darüber hinaus sind eine Vielzahl von zusätzlichen Verstärkungs- und Versteifungsblechen erforderlich, die den Fertigungsaufwand erheblich erhöhen.

Aus dem Stand der Technik sind Verbindungsknoten in verschiedenen Ausführungen bekannt.

So ist in der US-Patentanmeldung mit der Veröffentlichungsnummer 2001/0000119 A1 und in der US-Patentschrift 6,092,865 A jeweils ein Fahrzeugtragrahmen in Space-Frame-Bauweise auf Basis von Hohlprofilen mit Verbindungsknoten beschrieben, bei welchen die Endbereiche von Quer- bzw. Vertikalträgern zur Verbindung mit einem Fahrzeuglängsträger durch entsprechend dimensionierte und miteinander fluchtend angeordnete Öffnungen in der Seite bzw. Oberseite des Längsträgers durchgesteckt und durch Schweißen mit diesem verbunden sind. Im Falle der US 6,092,865 A sind die derart ausgebildeten Verbindungsknoten zusätzlich durch aufgeklebte Eckversteifungen in Form von Knotenblechen gesichert.

In der Patentschrift US 5,848,469 A ist ein Verfahren zur Herstellung von Verbindungsknoten in einem Fahrzeugtragrahmen mit als Hohlprofile ausgebildeten Längs- und Querträgern angegeben, bei dem die Endbereiche der Querträger durch miteinander fluchtend angeordnete Öffnungen in den Längsträgern durchgesteckt sind. Die Verbindung erfolgt hierbei jedoch nicht durch Schweißen, sondern kraftschlüssig durch ein in den stirnseitig offenen Endbereich der Querträger eingeführtes Werkzeug, welches den Endbereich radial nach außen spreizt und ihn somit mit dem Längsträger im Bereich der Öffnung verklammert.

In der US-Patentschrift 2,009,963 schließlich ist ein im wesentlichen zweidimensionaler Fahrzeugrahmen, bestehend aus zwei Längsträgern und verschiedenen Querträgern, beschrieben. Die Querträger sind an ihren Enden kreuzweise eingeschnitten, so dass sie längs ausgerichtete, über den Umfang verteilte vorsprünge ausbilden, deren Länge die Wandstärke der Längsträger geringfügig übersteigt. Die Verbindungsknoten zwischen Längs- und Querträgern sind derart ausgebildet, dass jeweils ein Querträger mit seinem einen Ende in eine an seinen Umfang angepaßte, auf der Innenseite der Längsträger ausgebildete Öffnung so weit eingesteckt ist, dass die Vorsprünge durch zu der Öffnung fluchtend angeordnete, in die Außenseite der Längsträger eingeformte Schlitze durchgesteckt sind und über die Außenseite geringfügig hinausragen. Der Längsträger und der jeweilige Querträger sind an den überstehenden Vorsprüngen an der Außenseite des Längsträgers und im Bereich der Öffnung an dessen Innenseite miteinander verschweißt.

Allen Verbindungsknoten der zitierten Druckschriften ist gemeinsam, dass sie ausschließlich für zwei- und dreidimensionale Fahrzeugtragrahmen aus Hohlprofilen geeignet sind, bei denen ein Hohlprofil mit seiner Stirnseite vollständig in ein anderes eingeschoben bzw. durch dieses durchgeschoben wird. Eine einfache Übertragung der aufgezeigten technischen Lösungen auf Fahrzeugkarosserien in Schalenbauweise ist somit nicht möglich, da diese auf flächigen, d.h. zweidimensional ausgedehnten, Schalenelementen basieren, so dass einfache Einstecklösungen, wie sie im vorgenannten Stand der Technik beschrieben sind, nicht anwendbar sind. Ferner ist aus der US 5,297,836 A, die die Merkmale des Oberbegriffs des Anspruchs 1 offenbart, eine Fahrzeugkarosserie bekannt, die aus gefügten, flachen Schalenelementen gebildet ist. Ein erstes Schalenelement weist dabei überstände auf. Das mit dem ersten Schalenelement zu fügende zweite Schalenelement weist dazu korrespondierende Sacknuten auf. Zum Fügen der Schalenelemente werden die Überstände des ersten Schalenelements in Sacknuten des zweiten Schalenelementes eingeführt und dort mit Hilfe von Klebern befestigt. Gemäß diesem Stand der Technik ist das erste Schalenelement als Versteifungsblech gebildet. Es dient zur Erhöhung der Steifigkeit zwischen einer Verbindung von zwei Karosserieblechen.

Der Erfindung liegt daher die Aufgabe zugrunde, eine Fahrzeugkarosserie der eingangs genannten Art mit einer hohen Steifigkeit zu schaffen, die ohne großen fertigungstechnischen Aufwand realisiert werden kann.

Diese Aufgabe wird mit einem Verbindungsknoten der eingangs genannten Art dadurch gelöst, dass auf den Überständen auf beiden Seiten des anderen Schalenelementes jeweils eine Manschette, bestehend aus einem Hülsenabschnitt und einem an dessen einem Ende ausgebildeten Kragen, sitzt, und dass der Kragen der Manschette mit dem die Durchstecköffnung umgebenden Bereich des anderen Schalenelementes und der Hülsenabschnitt mit dem Überstand stoffschlüssig verbunden sind.

Der zentrale Vorteil dieser Konstruktion liegt darin, dass durch das Durchstecken der an dem einen Schalenelement vorgesehenen Überstände durch die im anderen Schalenelement ausgebildeten Durchstecköffnungen die Steifigkeit einer aus derart verbundenen Schalenelementen gebildeten Fahrzeugkarosserie im Vergleich zu einer Fahrzeugkarosserie mit ausschließlich durch Stoffschluß verbundenen Schalenelementen wesentlich größer ist. Hinzu kommt, dass durch die auf den Überständen sitzenden Manschetten gut nutzbare Anbindungszonen für eine stoffschlüssige Verbindung der miteinander verbundenen Schalenelemente verwirklicht sind. Mit der erfindungsgemäßen Verbindungstechnik für Fahrzeugkarosserien in Schalenbauweise, bei der von dem Schalenelement mehrere Überstände durch in der Seitenwand eingeformte Durchstecköffnungen durchgesteckt werden, lassen sich die Vorzüge der Space-Frame-Technologie hinsichtlich der Karosseriesteifigkeit mit den besonderen Vorteilen der Schalenbauweise, nämlich dem geringen Gewicht und der stark reduzierten Teilezahl, in optimaler Weise verbinden, so dass im Ergebnis eine Karosserie erhalten wird, die in allen relevanten Merkmalen Karosserien in herkömmlicher Bauart überlegen ist.

Nach einer bevorzugten Ausführungsform der Erfindung weisen die in dem anderen Schalenelement ausgebildeten Durchstecköffnungen relativ zu den Abmessungen der Überstände des einen Schalenelementes ein Übermaß auf. Hierbei wird berücksichtigt, dass z.B. die Bodenplatte eines Fahrzeuges als groß dimensioniertes Schalenelement vielfach mehrere, teilweise weit auseinander liegende Überstände aufweist, über welche sie an die Fahrzeugseitenwand und ggf. an weitere Schalenelemente über den erfindungsgemäßen Verbindungsknoten angebunden ist, was besonders hohe Anforderungen an eine maßhaltige Fertigung stellt. Im Falle von relativ zu den Abmessungen der Überstände mit Übermaß ausgebildeten Öffnungen in den Seitenschwellern können somit größere Fertigungstoleranzen zugelassen werden.

Hinsichtlich einer unter fertigungstechnischen Gesichtspunkten einfachen Realisierbarkeit ist es zweckmäßig, wenn die stoffschlüssige Verbindung als Schweißverbindung ausgebildet ist. Im Falle der Schweißverbindung zwischen Manschette und dem anderen Schalenelement ist es vorteilhaft, wenn diese als Laserschweißnaht ausgebildet ist. Dadurch ergibt sich ein verbessertes Betriebsfestigkeitsverhalten der Konstruktion sowie eine höhere Steifigkeit. Ist diese Laserschweißnaht zudem als umlaufende Naht ausgebildet, läßt sich eine besonders dichte Verbindung zwischen der Manschette und dem anderen Schalenelement erzielen, wodurch beispielsweise der Durchtritt von Feuchtigkeit an dieser Stelle minimiert wird.

Im Falle der Schweißverbindung zwischen Manschette und dem Überstand des einen Schalenelementes ist die Ausführung mittels Punktschweißens sinnvoll. Dieses Schweißverfahren läßt sich besonders leicht automatisieren und erlaubt zudem die Nutzung bestehender Anlagen, was zur Senkung der Fertigungskosten beiträgt.

Eine weitere vorteilhafte Ausführungsform der erfindungsgemäßen Fahrzeugkarosserie umfaßt Schalenelemente, die als Bodenplatte und Seitenwände ausgebildet sind, und ist dadurch gekennzeichnet, dass die Seitenwände integrierte Bodenschweller aufweisen, in denen die Durchstecköffnungen vorgesehen sind. Durch diese Lösung läßt sich eine Karosserie mit Verbindungsknoten außerordentlich hoher Steifigkeit realisieren, da hierbei das als Bodenplatte ausgebildete Schalenelement mit seinen Überständen in ein ohnehin besonders versteiftes Karosserieteil eingreift.

Im folgenden wird die Erfindung anhand einer ein Ausführungsbeispiel darstellenden Zeichnung erläutert. Im einzelnen zeigen:
- Fig. 1: eine zweiteilige Bodenplatte und eine Fahrzeugseitenwand in Schalenbauweise aus metallischen Werkstoffen, sowie zwei Manschetten in perspektivischer Ansicht und
- Fig. 2: den Verbindungsknoten zwischen Bodenplatte und Seitenwand im geschnittener Ansicht.

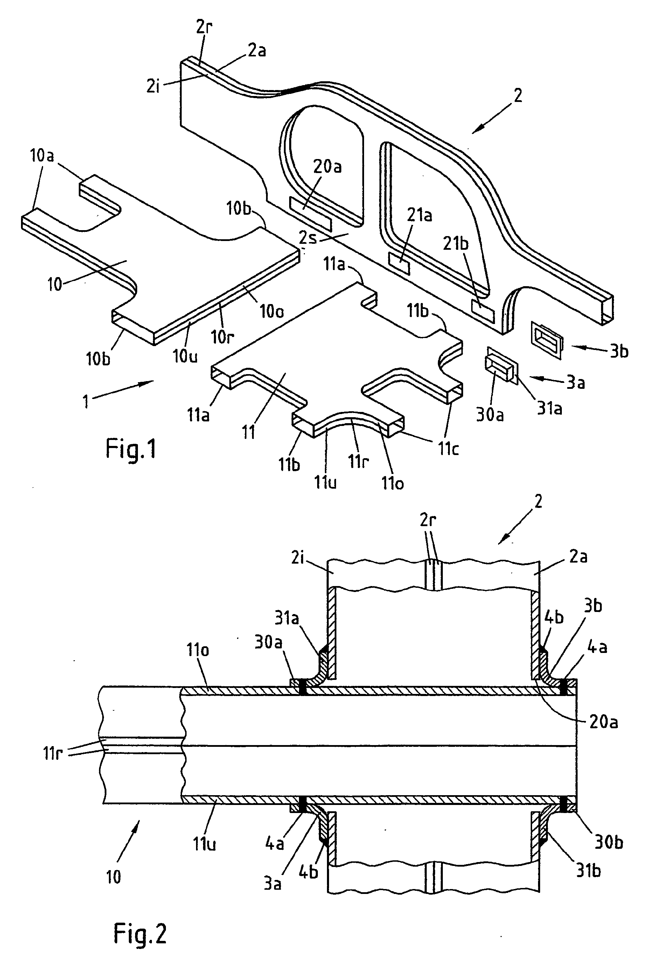

Die zweiteilige Bodenplatte 1 gemäß Fig. 1 ist in Schalenbauweise aus metallischen Werkstoffen ausgeführt. Als metallische Werkstoffe eignen sich insbesondere Stahl, aber auch andere Werkstoffe, wie z.B. Aluminium. Die Bodenplatte 1 besteht aus einem hinteren Teil 10 und einem vorderen Teil 11, welche jeweils aus einer oberen Schale 10o bzw. 11o und einer unteren Schale 10u bzw. 11u zusammengesetzt sind. Die zwischen den beiden Teilen 10, 11 verbleibende Lücke wird beispielsweise durch ein weiteres, nicht dargestelltes Schalenelement geschlossen. In Fig. 1 ist ebenfalls eine Fahrzeugseitenwand 2 dargestellt, die einen unterhalb der Aussparungen für die Fahrzeugseitentüren angeordneten Seitenschweller 2s umfaßt und ebenfalls in Stahl-Schalenbauweise mit einer äußeren Schale 2a und einer inneren Schale 2i ausgeführt ist. Die oberen und unteren Schalen 10o, 11o, 10u, 11u des vorderen und hinteren Teiles 10, 11 der Bodenplatte 1 sowie die äußere und innere Schale 2a, 2i der Seitenwand 2 sind über nicht dargestellte Schweißpunkte an ihren umgebogenen umlaufenden Rändern 10r, 11r, 2r miteinander verbunden (s. Fig. 2).

Der hintere Teil 10 der Bodenplatte 1 weist zwei sich in Richtung des Fahrzeughecks erstreckende Überstände 10a sowie zwei nach außen weisende Überstände 10b auf. Entsprechend weist der vordere Teil 11 der Bodenplatte 1 zwei in Richtung der Fahrzeugfront weisende Überstände 11c sowie zwei Paare jeweils nach außen weisender Überstände 11a und 11b auf. Im Seitenschweller 2s der Fahrzeugseitenwand 2 sind drei rechteckige, durch die innere und äußere Schale 2i, 2a durchgehende Öffnungen 20a, 21a, 21b eingeformt, durch die die in Richtung der Seitenwand 2 weisenden Überstände 10b, 11a, 11b des hinteren und vorderen Teiles 10, 11 der Bodenplatte 1 durchgesteckt werden können. Dabei sind die Innenabmessungen der Öffnungen 20a, 21a, 21b derart gewählt, dass sie ein Übermaß gegenüber den Außenabmessungen der ihnen jeweils zugeordneten Überstände 10b, 11a, 11b aufweisen.

In Fig. 1 sind weiterhin zwei Manschetten 3a, 3b insbesondere aus Stahl abgebildet, welche jeweils einen Hülsenabschnitt 30a, 30b und jeweils einen an dessen einem Ende ausgebildeten Kragen 31a, 31b umfassen. Die Innenabmessungen der Hülsenabschnitte 30a, 30b entsprechen dabei den Außenabmessungen des ihnen zugeordneten Überstandes 11b, so dass sie spaltfrei auf dem Überstand 11b sitzen (s. Fig. 2). Für die Überstände 10b und 11a sind jeweils ein weiteres Paar von Manschetten vorgesehen, die jedoch aus Gründen der Übersichtlichkeit in Fig. 1 nicht abgebildet sind.

In Fig. 2 sind die durch die Teile 10, 11 der Bodenplatte 1 und die Seitenwand 2 gebildeten Verbindungsknoten am Beispiel des Überstandes 11b des vorderen Teils 11 der Bodenplatte 1 und der Öffnung 21b im Seitenschweller 2s der Seitenwand 2 dargestellt.

Wie in Fig. 2 gezeigt, ist der Überstand 11b durch die Öffnung 21b im Seitenschweller 2s durchgeschoben. Da die Innenabmessungen der Öffnung 21b gegenüber den Außenabmessungen des Überstandes 11b mit Übermaß ausgelegt sind, liegen die obere und untere Schale 11o, 11u nicht spaltfrei an den Rändern der Öffnung 21b an, wie in Fig. 2 erkennbar ist. Auf dem Überstand 11b sitzen weiterhin die Manschetten 3a und 3b beiderseits der Seitenwand 2. Dabei liegen der Kragen 31a der Manschette 3a an der inneren Schale 2i und der Kragen 31b der Manschette 3b an der äußeren Schale 2a an. Der Überstand 11b ist vorzugsweise so weit durch die Öffnung 21b durchgeschoben, dass der Hülsenabschnitt 30b der Manschette 3b bündig mit dem stirnseitigen Rand des Überstandes 11b abschließt. Zur Fixierung des Verbindungsknotens sind die Manschetten sowohl mit dem Überstand 11b als auch mit der Seitenwand 2 stoffschlüssig, vorzugsweise mittels einer Schweißverbindung, verbunden. Gemäß Fig. 2 erfolgt die Anbindung der Krägen 31a, 31b der Manschetten 3a, 3b an die Seitenwand 2 mittels einer Laserschweißnaht 4b sowie die Anbindung der Hülsenabschnitte 30a, 30b an den Überstand 11b über eine Punktschweißverbindung 4a.

## Patentansprüche

1. Fahrzeugkarosserie aus einem metallischen Werkstoff mit in Schalenbauweise ausgebildeten, miteinander verbundenen Schalenelementen,
wobei von jeweils zwei miteinander verbundenen Schalenelementen das eine Schalenelement (10, 11) an seinem dem anderen Schalenelement (2) zugewandten Rand Überstände (10b, 11a, 11b) aufweist, die durch im anderen Schalenelement (2) ausgebildete Durchstecköffnungen (20a, 21a, 21b) gesteckt sind,
**dadurch gekennzeichnet, dass**
auf den Überständen (10b, 11a, 11b) auf beiden Seiten des anderen Schalenelementes (2) jeweils eine Manschette (3a, 3b), bestehend aus einem Hülsenabschnitt (30a, 30b) und einem an dessen einem Ende ausgebildeten Kragen (31a, 31b), sitzt, und dass der Kragen (31a, 31b) der Manschette (3a, 3b) mit dem die Durchstecköffnung (20a, 21a, 21b) umgebenden Bereich des anderen Schalenelementes (2) und der Hülsenabschnitt (30a, 30b) mit dem Überstand (10b, 11a, 11b) stoffschlüssig verbunden sind.

2. Fahrzeugkarosserie nach Anspruch 1,
**dadurch gekennzeichnet, dass**
die in dem anderen Schalenelement (2) ausgebildeten Durchstecköffnungen (20a, 21a, 21b) relativ zu den Abmessungen der Überstände (1Ob 11a, 11b) des einen Schalenelementes (10, 11) ein Übermaß aufweisen.

3. Fahrzeugkarosserie nach Anspruch 1 oder 2,
**dadurch gekennzeichnet, dass**
die stoffschlüssige Verbindung als Schweißverbindung ausgebildet ist.

4. Fahrzeugkarosserie nach Anspruch 3, ,
**dadurch gekennzeichnet, dass**
die Schweißverbindung zwischen Manschette (3a, 3b) und dem anderen Schalenelement (2) als Laserschweißnaht (4b) ausgebildet ist.

5. Fahrzeugkarosserie nach Anspruch 4,
**dadurch gekennzeichnet, dass**
die Laserschweißnaht (4b) als umlaufende Naht ausgebildet ist.

6. Fahrzeugkarosserie nach einem der Ansprüche 3 bis 5,
**dadurch gekennzeichnet, dass**
die Schweißverbindung zwischen Manschette (3a, 3b) und dem Überstand (10b 11a, 11b) des einen Schalenelementes (10, 11) durch Punktschweißen (4a) realisiert ist.

7. Fahrzeugkarosserie nach einem der Ansprüche 1 bis 6, mit als Bodenplatte (1) und Seitenwände (2) ausgebildeten Schalenelementen,
**dadurch gekennzeichnet, dass**
die Seitenwände (2) integrierte Bodenschweller (2s) aufweisen, in denen die Durchstecköffnungen (20a, 21a, 21b) vorgesehen sind.

## Claims

1. Steel vehicle body comprising interconnected shell elements that form a monocoque construction, whereby of two interconnected shell elements the one shell element (10, 11) has projections (10b, 11a, 11b) on its edge facing the other shell element (2), which are inserted through insertion openings (20a, 21 a, 21b) provided in the other shell element (2), **characterized in that** in each case a cuff (3a, 3b) which consists of a sleeve section (30a, 30b) and of a collar (31a, 31b) that is formed on one end thereof, is placed on the projections (10b, 11a, 11b) on both sides of the other shell element (2) and **in that** the collar (31a, 31b) of the cuff (3a, 3b) is joined with material fit to the area of the other shell element (2) which surrounds the insertion opening (20a, 21a, 21b) and the sleeve section (30a, 30b) is joined with material fit to the projection (10b, 11a, 11b).

2. Vehicle body according to Claim 1, **characterized in that** the insertion openings (20a, 21a, 21b) provided in the other shell element (2) have an oversize relative to the dimensions of the projections (10b, 11a, 11b) of the one shell element (10, 11).

3. Vehicle body according to Claim 1 or 2, **characterized in that** the join with material fit is formed as a welded joint.

4. Vehicle body according to Claim 3, **characterized in that** the welded joint between cuff (3a, 3b) and the other shell element (2) is formed as a laser weld seam (4b).

5. Vehicle body according to Claim 4, **characterized in that** the laser weld seam (4b) is formed as an all-round seam.

6. Vehicle body according to any one of Claims 3 to 5, **characterized in that** the welded joint between cuff (3a, 3b) and the projection (10b, 11a, 11b) of the one shell element (10, 11) is realized by spot welding (4a).

7. Vehicle body according to any one of Claims 1 to 6, comprising shell elements formed as a bottom plate (1) and side panels (2), **characterized in that** the side panels (2) have integrated floor sills (2s), in which the insertion openings (20a, 21a, 21b) are provided.

## Revendications

1. Carrosserie de véhicule en matériau métallique, avec des éléments de coque assemblés entre eux, réalisés à la manière d'une coque,
dans laquelle, pour chaque paire d'éléments de coque assemblés entre eux, le premier élément de coque (10, 11) présente à son bord tourné vers l'autre élément de coque (2), des saillies (10b, 11a, 11b) qui s'emboîtent dans des ouvertures d'emboîtement traversantes (20a, 21a, 21b) réalisées à travers l'autre élément de coque (2), **caractérisée en ce qu'**un manchon (3a, 3b) constitué d'une section creuse (30a, 30b) et d'une collerette (31a, 31b) formée à l'une de ses extrémités, se loge sur les saillies (10b, 11a, 11b), des deux côtés de l'autre élément de coque (2), et **en ce que** la collerette (31a, 31b) du manchon (3a, 3b) est assemblée avec la région entourant l'ouverture d'emboîtement traversante (20a, 21a, 21b) de l'autre élément de coque (2), et la section creuse (30a, 30b) est assemblée par liaison de matière avec les saillies (10b, 11a, 11b).

2. Carrosserie de véhicule selon la revendication 1, **caractérisée en ce que** les ouvertures d'emboîtement traversantes (20a, 21a, 21b) réalisées dans l'autre élément de coque (2) sont surdimensionnées par rapport aux dimensions des saillies (10b, 11a, 11b) du premier élément de coque (10, 11).

3. Carrosserie de véhicule selon la revendication 1 ou 2, **caractérisée en ce que** l'assemblage par liaison de matière est réalisé sous la forme d'un assemblage soudé.

4. Carrosserie de véhicule selon la revendication 3, **caractérisée en ce que** l'assemblage soudé entre manchons (3a, 3b) et l'autre élément de coque (2) est réalisé sous la forme d'un cordon de soudure au laser (4b).

5. Carrosserie de véhicule selon la revendication 4, **caractérisée en ce que** le cordon de soudure au laser (4b) est réalisé sous la forme d'un cordon périphérique.

6. Carrosserie de véhicule selon l'une des revendications 3 à 5, **caractérisée en ce que** l'assemblage soudé entre manchons (3a, 3b) et la saillie (10b, 11a, 11b) du premier élément de coque (10, 11) est réalisé par soudage par points (4a).

7. Carrosserie de véhicule selon l'une des revendications 1 à 6, avec des éléments de coque réalisés sous la forme de plaques de plancher (1) et de côté (2) **caractérisée en ce que**
les plaques de côtés (2) présentent des renforts de plancher (2s) dans lesquels sont prévues les ouvertures d'emboîtement traversantes (20a, 21a, 21b).
